# EUROPEAN PATENT SPECIFICATION

(11) **EP 0 676 907 B1**
(45) Date of publication and mention of the grant of the patent: **23.06.2004**
(21) Application number: 95103831.4
(22) Date of filing: 16.03.1995
(51) Int. Cl.: H04Q 7/38

(54) **Method and apparatus for call handover between different mobile radio networks**
Verfahren und Gerät zur Rufübergabe zwischen unterschiedlichen mobilen Funknetzwerken
Procédé et appareil pour le transfert d'appel entre des différents réseaux de transfert mobiles

(30) Priority: 05.04.1994 GB 9406697
(43) Date of publication of application: 11.10.1995
(73) Proprietor: MOTOROLA, INC., Schaumburg, IL 60196 (US)
(72) Inventor: Whinnett, Nicholas William, London SW11 1TH (GB); Robinson, William Neil, Weybourne, Farnham Surrey GU9 9HH (GB); Gibbs, Jonathan Alastair, Hedge End, Southampton Hants SO3 4UL (GB); van den Heuvel, Anthony, Windlesham, Surrey, GU20 6HZ (GB)
(74) Representative: McCormack, Derek James

(56) References cited:
- EP-A- 0 379 642
- EP-A- 0 512 962
- EP-A- 0 570 643
- WO-A-89/07380
- WO-A-93/07721
- GB-A- 2 280 085

## Description

### Field of the Invention

This invention relates to the field of mobile radio and methods of inter-network call handover, for handing over a call from an initial communications network to a target communications network.

### Background of the Invention

The trend towards increasingly software configurable mobile radio units, together with the growing desire to support continuous uninterrupted service provision between communications systems or networks (eg. UPT, PCS, UMTS) makes the ability to continue a call when crossing network boundaries increasingly important.

Examples of such boundaries are between a public cellular operator and an indoor office wireless PABX, or between a public cellular network and a domestic cordless network, or between micro-cells and macro-cells supporting the same service provider.

UK patent application, publication No. 2271040 describes call routing for a portable cellular cordless (PCC) radiotelephone in cordless and cellular telephone systems and describes the handing over of a call in progress from the cellular telephone system to the cordless telephone system by establishing a three-way call through the cellular telephone system. It also describes handing over of a call from the cordless telephone system to the cellular telephone system by performing a three-way call between the PCC radiotelephone operating in the cellular telephone system, a second party and a landline telephone number of a cordless base station for the PCC in the cordless telephone system. Whereas such a three-way call is possible where the cellular telephone system or the public switched telephone network (PSTN) provides for such a facility, this is not always the case. In addition, the performance of such an arrangement may not be optimal in the case (as here) where two "parties" of the three-way call are the same, unless there is provision to avoid path-delay mismatching, giving rise to echoes.

US patent No. 5,127,042 describes a cellular cordless telephone operating with both a cordless base station and a cellular base station and describes the use of a "call waiting" facility at the called party to perform automatic transfer of a call between a cellular telephone call and a cordless telephone call. Such an arrangement is possible where the called party is known to have a call waiting capability, but this is not always the case.

There is a need for an improved metod of inter-network call handover.

### Summary of the Invention

According to a first aspect of the present invention1a method is provided of inter-network call handover, for handing over a call from an initial communications network to a target communications network, comprising the steps of establishing a call between a mobile subscriber unit and the initial communications network using a first identification number allocated to that unit in the initial network, identifying that a handover to the target network is desired providing the initial network with a second identification number allocated to the unit in the target network; initiating a call transfer request to establish a call to the unit in the target network using the second identification number and establishing a new link in the target network using the second identification number.

Thus the invention provides simultaneous operation by a mobile unit on two networks and the automatic invocation of existing or new network services to transfer the call, which gives rise to the benefit of call continuation with little disruption, which is a feature not available today.

The boundaries of a network are defined by its addressing domain. A unit or node that is able correctly to understand the addressing domain of a network is part of that network. The invention enables call handovers across these boundaries.

The request to establish a call to the unit in the target network is, in this aspect, a call transfer request, that is to say a request to implement an operation by which an established (i.e. active) call is transferred to a third party, where the user served by the call transfer operation is either a called or a calling party. In this embodiment, the "third party" may appear to the initial network as a third party, while in fact the third party is the same mobile subscriber unit identified by a new identification number allocated to that unit in the target network. Call transfer is a known supplementary service defined by CCITT.

According to a second aspect of the present invention, a method of inter-network call handover is provided, for handing over a call from an initial communications network to a target communications network, comprising the steps of: establishing a call between a mobile subscriber unit and the initial communications network using a first identification number allocated to that unit in the initial network; pre-providing, to a predetermined node in the initial network, a second identification number allocated to the unit in the target network; identifying that a handover to the target network is desired; initiating a request to establish a call to the unit in the target network using the second identification number by providing a signal from the mobile subscriber unit to the predetermined node requesting a handover to the mobile subscriber unit identified by the second identification number; and establishing a new link in the target network using the second identification number.In an alternative embodiment, the second identification number is pre-provided to a predetermined node in the initial network, for example a "home" base station or a cordless (i.e. short-range, dedicated or private-shared) base station, and the step of initiating a request comprises providing a signal from the mobile subscriber unit to the predetermined node requesting a handover to the mobile subscriber unit identified by the second identification number. This embodiment is particularly useful where a call is initially set up to or from the home base station or cordless base station and the subscriber moves away from that location while the call is in progress.

A benefit of this aspect of the invention is that the predetermined node can be established in a network which has lower call tariffs and the arrangement provides a mechanism for handing over from that network or to that network under the user's control, thereby enabling the user to take full advantage of the lower call tariffs.

The predetermined node preferably has two communications channels (e.g. telephone lines) in addition to its communication channel to the mobile subscriber unit. While the call is ongoing on one of these channels, the predetermined node can use the other channel to set up a path of communication to the target network, which in turn establishes radio communication with the mobile subscriber unit.

In a further aspect of the invention, a method of inter-network call handover is provided, for handing over a call between a mobile subscriber unit and a second party from an initial communications network to a target communications network, comprising the steps of: associating the mobile subscriber unit with a first identification number allocated to the mobile subscriber unit in the target network and with a predetermined node in the target network; establishing a call between a mobile subscriber unit and the initial communications network using a second identification number allocated to that unit in the initial network; establishing a communication path between the mobile subscriber unit and the predetermined node in the target network via the initial network; establishing a communication path between the predetermined node in the target network and the second party; and linking, at the predetermined node, the two communication paths; identifying that a handover to the target network is desired; establishing a call to the mobile subscriber unit in the target network using the second identification number; and connecting, at the predetermined node, the mobile subscriber unit and the second party.

As a further step, the communication path between the mobile subscriber unit and the initial network is preferably released, as is the communication path between the predetermined node and the initial network.

This aspect of the invention is particularly applicable where the predetermined node is located in the target network, for example in the case where the predetermined node is a cordless base station, it is applicable to roaming inwards towards that base station.

Preferred embodiments of the invention will now be described, by way of example only, with reference to the drawings.

### Brief Description of the Drawings

FIG. 1 illustrates two networks and a method of handover therebetween in accordance with a first embodiment of the invention.
FIG. 2 shows details of the mobile radio of FIG. 1.
FIG. 3 shows signals transferred between the mobile radio of FIG. 1 and the two networks of FIG. 1.
FIG. 4 gives a more specific example of the networks of FIG. 1 for the purposes of explanation of the signals of FIG. 3.
FIG. 5 is a block diagram of a cordless base station operating as a hub in accordance with a second embodiment of the invention.
FIG. 6 illustrates two networks and a method of handover therebetween in accordance with the second embodiment of the invention.

### Detailed Description of the Drawings

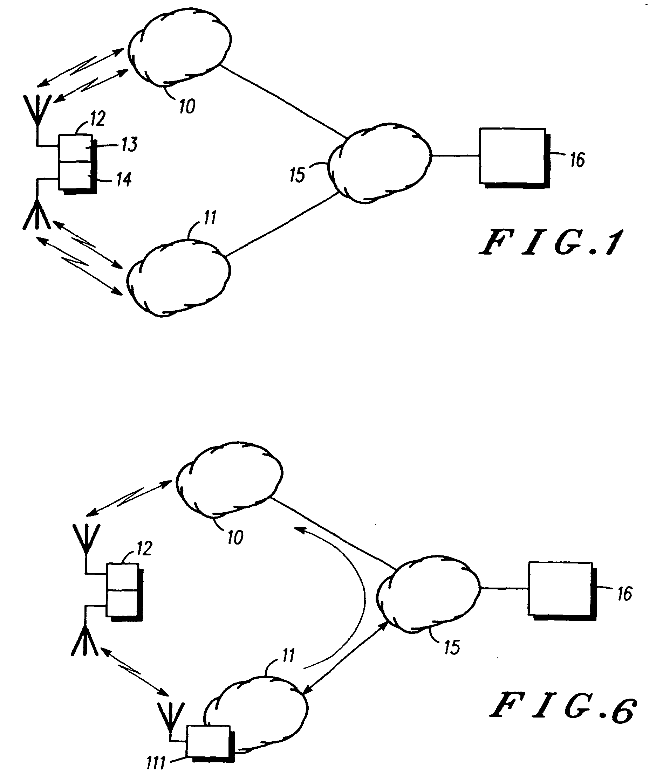

The generic problem of handover between two networks is illustrated in FIG. 1.

In FIG. 1, two mobile radio networks are shown, 10 and 11. As an example, network 10 is be a cellular radio network (eg. GSM) and network 11 is be a domestic cordless system or a wireless PABX. Operating on these networks is a mobile subscriber unit in the form of a mobile radio 12 having GSM radio and software elements 13 and cordless radio and software elements 14.

The GSM radio and software elements 13 include a subscriber identity module with a identification number assigned to the mobile radio user by the operator of network 10 and the cordless radio and software elements 14 include an identification number assigned to the mobile radio user by the operator of network 11. These numbers are selected from the different addressing domains of the different networks 10 and 11.

The networks 10 and 11 are connected to each other via a third network 15, for example a public switched telephone network (PSTN) or an integrated digital services network (ISDN), which additionally connects networks 10 and 11 to second party equipment, for example a wireline telephone 16. Reference will be made in this description to the equipment 16 being a "telephone", but it should be understood that equipment 16 could be almost any telecommunications destination, including a mobile radio telephone or a fixed or mobile data terminal.

Network 15 supports the supplementary service "Call Transfer", described in CCITT Volume III, Fascicle III.7 "Integrated Services Digital Network General Structure and Service Capabilities", Recommendations I.110-I.257 of November 1988.

From that document, the general principle of call transfer is as follows. The Call Transfer supplementary service is subscribed to by prior arrangements with the service provider. Subscription can be made for "Normal Call Transfer" and/or for either of the alternate procedures (ie. "Single-Step Call Transfer" or "Explicit Call Transfer") offered by the service provider.

A served user, user X, can transform an established call with user Y into (effectively) a call from user Y to a third party, user Z. When the served user (user X) asks the service provider to begin the "Normal" Call Transfer, the service provider puts the already established call (with user Y) on hold. User X then proceeds to establish the second call (to user Z). Upon request from user X to complete the Call Transfer, the service provider would connect users Y and Z together while removing the connections between user X and the other two users.

In the resulting call Y to Z, user Z will have all the relevant characteristics of the called party, but user Y will not necessarily have all the characteristics of the calling party, depending on whether user Y called user X and also depending on which service or supplementary service is under consideration.

In some networks, user X can request completion of the Call Transfer either during or after the establishment of the connection to user Z.

The service provider will optionally notify users Y and Z of the transfer and, depending on interworking conditions and the supplementary services subscribed to by users Y and Z, will indicate to user Y the number of user Z and will indicate to user Z the number of user Y.

Normal call transfer is suitable for the purposes of the preferred embodiment of the present invention.

It is not necessary that the call transfer service is implemented in network 15. It can instead be implemented in network 10. Call transfer is a supplementary service which exists in many communications networks today, for example GSM, DECT and TETRA.

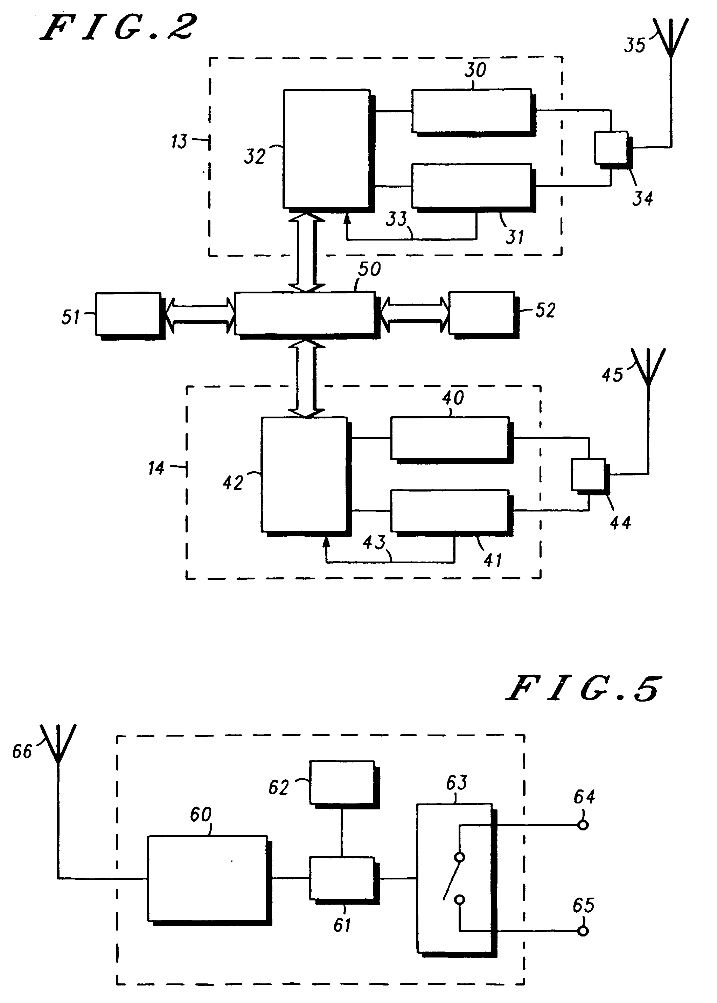

Details of the mobile radio 12 are shown in FIG. 2. The GSM radio elements 13 include a transmitter 30, a receiver 31 and baseband processing circuitry 32. A receive signal strength indicator (RSSI) 33 passes from the receiver 31 to the circuitry 32. A duplexer 34 connects the transmitter and the receiver to an antenna 35. the cordless radio elements 14 similarly include a transmitter 40, a receiver 41, baseband processing circuitry 42, an RSSI 43, a duplexer 44 and an antenna 45.

Controlling both the GSM radio elements 13 and the cordless radio elements 14 is a microprocessor 50 having random access memory 52 and having a releasably connected subscriber identity module (SIM) 51.

The SIM 51 contains separate identification numbers (IDs) for the GSM cellular radio network and the cordless network. Alternatively, two SIMs can be provided, or one SIM and one hard wired ID or more than one hard wired ID.

While the mobile radio is shown as having separate receivers and transmitters for the two mobile radio networks, the same hardware elements may be usable for both networks, depending on the frequencies involved, the available switching times for switching between those frequencies and other factors.

Referring to FIGs. 1 and 2 together, the case will now be considered where, for reasons of deteriorating signal quality as indicated by RSSI 33 (or some other quality measure), or merely reasons of differential call charges, the user of the mobile radio 12 , while in communication with the second party equipment 16 via networks 10 and 15, wishes to hand over to network 11 using the mobile radio's multimode capability. Such a handover/re-establishment can be triggered by a number of criteria or in a number of circumstances and the specific manner of triggering is not relevant to the present invention. For example, the handover can be manually triggered when the user knows he has entered the range of the domestic cordless network 11.

The operation is as follows. Initially the mobile radio is communicating via network 10. The mobile radio enters the range of network 11 and its cordless radio and software elements 14 identify signals from network 11 and complete any necessary registration procedures. The mobile radio decides to trigger a handover, or is instructed to trigger a handover. The mobile radio automatically sends a command to network 10 indicating a "Call Transfer" request to transfer to the user's network 11 address.

This call transfer request includes the user's network 11 ID (i.e. his PSTN telephone number in the case where network 11 is a cordless telephone network) retrieved from SIM 51.

In the case of a GSM-to-cordless transfer, the ID is sent through GSM layer 3. The GSM switch interprets the message and optionally negotiates with the PSTN about performing the transfer.

In the case of a cordless-to-GSM transfer, the PSTN recognises the GSM number and negotiates with the GSM network about performing the transfer.

The network 15 commences execution of the call transfer request to the requested address. Since this is an address in network 11, network 15 in effect establishes a communication path from telephone equipment 16 to network 11. Network 11 indicates to the mobile radio 12 that there is an incoming call for the mobile radio. The mobile radio automatically accepts the call from network 11 and the call between the mobile radio and network 10 is dropped.

An advantage of the arrangement is that no changes to the network are required to enable the handover. All of the new functionality is implemented in the mobile radio 12.

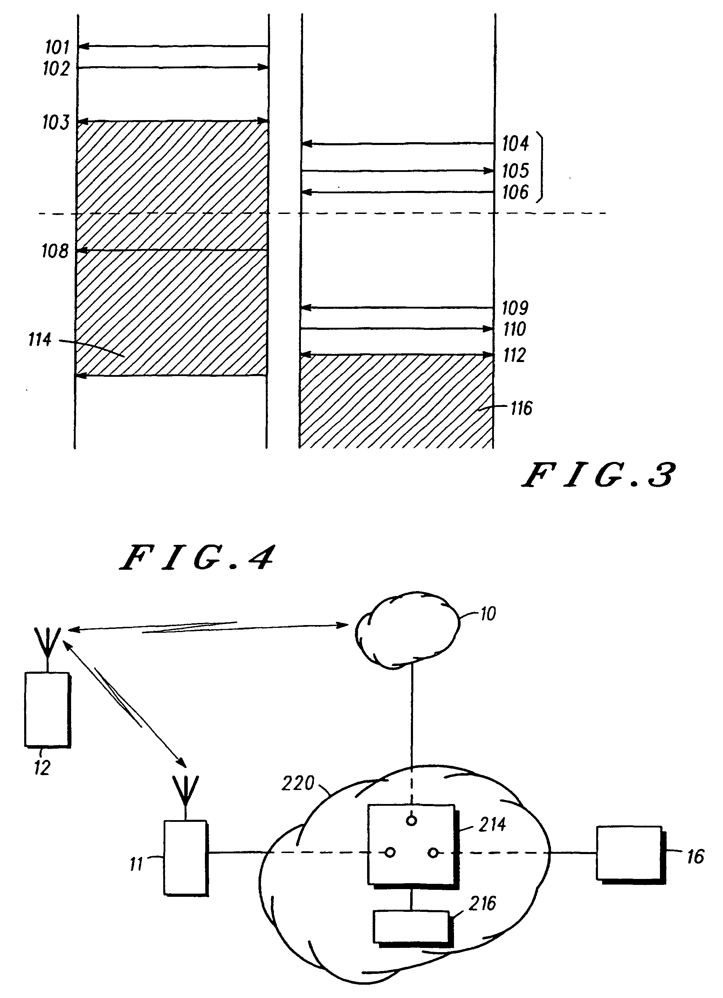

The above procedure is described in more detail with reference to FIGs. 3 and 4. In the example of FIG. 4, network 15 is an ISDN network and is referred to as network 220. Network 220 has a network switching function 214 with switching control function 216.

The mobile radio 12 registers with the cellular system (network 10) by means of an exchange of signalling messages 101 and 102 (FIG.3). As an option, additional signalling messages are exchanged at this time, for example to perform mobile authentication, as may be done in GSM. A call is initiated on network 10 in step 103, using the protocols of network 10, between second party equipment 16 and mobile radio 12 (FIG.4). During this phase of the call, points a and c are connected in the network switching function 214.

The mobile radio 12 is able to handover between cells of network 10. At some point during the call, the mobile acquires and registers with network 11 (steps 104, 105, 106). The mobile radio then sends a call transfer request to network 10 which contains the identification number allocated to the mobile radio unit in network 11. This is passed to the switching control function 216 of public network 220. The switching control function signals from node b to network 11 that there is an incoming call. Network 11 in turn pages the mobile radio (step 109) and the mobile radio responds (step 110). At this point, the switching function 214 connects nodes a and b and (optionally) suspends the connection between nodes a and c. The mobile radio then sends a "Clear Down" message 114 to network 10. At this point the switching function, under the control of the control function, connects nodes b and c and the call continues (116).

Many situations can be considered where the method described is useful. For example a farmer with a cordless telephone network in his farmhouse may commence a call in the vicinity of his farmhouse and walk into his field, out of range of the cordless network. Provided that the farm is covered by a much larger cell of a cellular radio telephone network and the farmer has subscribed to that network, the call can be continued via the cellular network.

A second method of achieving inter-network call handover is now described, in which all calls are routed through a central hub or predetermined node.

In this method, all calls to and from a mobile radio always pass through a common point or 'central hub' regardless of which network the mobile radio is using. This central hub must be capable of setting up a simultaneous call to an address on another network.

An example of a central hub in the form of a cordless base station is shown in FIG. 5. it comprises a cordless base station transceiver part 60, logic circuitry 61, storage 62, for storing the user's GSM ID, switch and line control circuit 63 and first and second telephone lines 64 and 65. An antenna 66 is connected to the transceiver part 60.

An example of operation will be described with reference to FIG.6. In this example, network 11 (or a predetermined node of network 11) is the central hub. Network 11 is, at least in the preferred embodiment, a domestic cordless telephone base station (illustrated as base station 111) with a two-line connection into the PSTN (network 15). All calls pass to and from the mobile radio 12 through cordless telephone base station 111.

Considering first the case where the mobile radio 12 commences operation within range of the cordless base station 111 and moves out of range of that network but within range of the GSM cellular network 10. When the need for a handover is identified, the mobile radio 12 recognises GSM network 10 and executes a registration procedure on that network (if not already executed) and it informs the cordless base station 111 that a handover to network 10 is requested and it supplies to the cordless network its GSM cellular telephone number (or this is preprogrammed in the cordless base station). The cordless base station 111 calls the user's cellular telephone number. The mobile radio 12 automatically accepts the call from the cellular network. The previous cordless link between the mobile radio 12 and base station 111 is disregarded. In a simple network, it is not necessary to "hang up" from the cordless network; the cordless base station merely ignores traffic on its radio interface until a handover back to the cordless network is desired.

For the process of handing over from network 10 to network 11, the following procedures take place.

Considering first the case of a mobile initiated call. The mobile unit initiates such a call by first dialling the central hub, which then places a second call to the desired number which is supplied by the user. Optionally this process is automated within the mobile radio 12. Since the call has been routed via the cordless base station 111, when the mobile unit comes into range of the cordless base station 111, registration occurs and the base station 111 automatically delivers the call to the mobile radio 12 using the cordless link. The cellular telephone call is dropped from the cellular network 10 by the mobile or by the base station 111.

As a refinement to the method, to avoid inefficient call routing, the call is only be placed via the cordless base station 111 if the identity of the cellular network or a sub-network of cellular network 10 is such that a handover to cordless base station 111 is likely, e.g. because the call is set up in a cellular radio network cell that is known to be the user's "home" cell.

In the case of incoming calls to the mobile radio 12, to enable handover, all calls must be routed via the cordless base station 111. The cordless base station 111, upon receiving an incoming call when the mobile radio 12 is not in the range of the cordless base station 111, sets up a connection to the mobile radio via the cellular network 10 using the mobile radio's cellular identity and connects the incoming call to the cellular connection. Handover will then occur in the same way as for mobile initiated calls.

This arrangement has the advantage that the mobile radio user need provide callers with only a single telephone number for the user to be reached in either network. This number will be the address of the central hub or node of that user in network 11. All routing of calls to the user via the other network 10 is performed by this central hub or node.

As a particularly preferred, but not necessarily essential feature, an on-going call through the cellular network need only be routed through the cordless base station 111 when it is determined that a handoff is likely to happen, for example when the mobile radio 12 is known to be in a cellular network or a cell which is known from predetermined information to be close to the cordless base station 111. Thus the step of determining that a handover is desired comprises identifying from pretermined cell site information that the mobile subscriber unit and the cordless base station are in a predetermined relationship.

## Claims

1. A method of inter-network call handover, for handing over a call from an initial communications network (10) to a target communications network (11) , comprising the steps of:
establishing a call between a mobile subscriber unit (12) and the initial communications network using a first identification number (ID in 10) allocated to that unit in the initial network,
identifying that a handover to the target network is desired
providing the initial network with a second identification number (ID in 11) allocated to the unit in the target network;
initiating a call transfer request to establish a call to the unit in the target network using the second identification number and
establishing a new link in the target network using the second identification number.

2. A method according to claim 1 and wherein:
the second identification number allocated to the unit in the target network is pre-provided to a predetermined node in the initial network;
and the method includes providing a signal from the mobile subscriber unit to the predetermined node requesting a handover of the mobile subscriber unit identified by the second identification number.

3. A method according to claim 2, comprising the initial step of establishing a communication path between the predetermined node and a second party, wherein the predetermined node establishes a communication path to the mobile subscriber unit via the target network, maintains the communication path to the second party and links the two communication paths.

4. A method according to either of claims 2 and 3, wherein the predetermined node is a cordless base station (of 11).

5. A method according to any one of the preceding claims which is operable to hand over a call between a mobile subscriber unit and a second party from the initial communications network to the target communications network, the method including:
establishing a communication path between the mobile subscriber unit and a predetermined node in the target network via the initial network;
establishing a communication path between the predetermined node in the target network and the second party;
linking, at the predetermined node in the target network, the two communication paths; and
connecting, at the predetermined node in the target network, the mobile subscriber unit and the second party.

6. A method according to claim 5, comprising the further step of disconnecting the call between the mobile subscriber unit and the initial communications network.

7. A method according to claim 5, wherein the predetermined node is a cordless base station.

8. A method according to claim 7, wherein the step of determining that a handover is desired comprises identifying from pretermined cell site information that the mobile subscriber unit and the cordless base station are in a predetermined relationship.

## Patentansprüche

1. Verfahren zur Rufübergabe zwischen Netzwerken, um eine Anrufverbindung von einem Ausgangskommunikationsnetzwerk (10) an ein Zielkommunikationsnetzwerk (11) zu übergeben, umfassend die Schritte:
Aufbauen einer Anrufverbindung zwischen einer Mobilfunk-Teilnehmereinheit (12) und dem Ausgangskommunikationsnetzwerk unter Verwendung einer ersten Identifikationsnummer (ID in 10), welche dieser Einheit in dem Ausgangsnetzwerk zugeordnet ist,
Identifizieren, dass eine Übergabe an das Zielnetzwerk gewünscht wird,
Bereitstellen einer zweiten Identifikationsnummer (ID in 11), welche der Einheit in dem Zielnetzwerk zugeordnet ist, an das Ausgangsnetzwerk,
Initiieren einer Rufübertragungsanforderung, um unter Verwendung der zweiten Identifikationsnummer eine Anrufverbindung mit der Einheit in dem Zielnetzwerk aufzubauen, und
Aufbauen einer neuen Verbindung in dem Zielnetzwerk unter Verwendung der zweiten Identifikationsnummer.

2. Verfahren gemäß Anspruch 1, wobei:
die zweite Identifikationsnummer, welche der Einheit in dem Zielnetzwerk zugeordnet ist, einem vorbestimmten Knoten in dem Ausgangsnetzwerk vorab bereitgestellt wird;
und wobei das Verfahren das Bereitstellen eines Signals von der Mobilfunk-Teilnehmereinheit an den vorbestimmten Knoten einschließt, welches eine Übergabe von der durch die zweite Identifikationsnummer identifizierten Mobilfunk-Teilnehmereinheit anfordert.

3. Verfahren gemäß Anspruch 2, umfassend den anfänglichen Schritt des Aufbauens eines Kommunikationspfades zwischen dem vorbestimmten Knoten und einer zweiten Partei, wobei der vorbestimmte Knoten einen Kommunikationspfad über das Zielnetzwerk zu der Mobilfunk-Teilnehmereinheit aufbaut, den Kommunikationspfad zu der zweiten Partei aufrechterhält und die zwei Kommunikationspfade verbindet.

4. Verfahren nach einem der Ansprüche 2 und 3, wobei der vorbestimmte Knoten eine schnurlose Basisstation (von 11) ist.

5. Verfahren nach einem der vorangehenden Ansprüche, welches ausführbar ist, um eine Anrufverbindung zwischen einer Mobilfunk-Teilnehmereinheit und einer zweiten Partei von dem Ausgangskommunikationsnetzwerk an das Zielkommunikationsnetzwerk zu übergeben, wobei das Verfahren umfasst:
Aufbauen eines Kommunikationspfades zwischen der Mobilfunk-Teilnehmereinheit und einem vorbestimmten Knoten in dem Zielnetzwerk über das Ausgangsnetzwerk;
Aufbauen eines Kommunikationspfades zwischen dem vorbestimmten Knoten in dem Zielnetzwerk und der zweiten Partei;
Verbinden der zwei Kommunikationspfade an dem vorbestimmten Knoten in dem Zielnetzwerk; und
Verbinden der Mobilfunk-Teilnehmereinheit und der zweiten Partei an dem vorbestimmten Knoten in dem Zielnetzwerk.

6. Verfahren gemäß Anspruch 5, umfassend den weiteren Schritt des Trennens der Anrufverbindung zwischen der Mobilfunk-Teilnehmereinheit und dem Ausgangskommunikationsnetzwerk.

7. Verfahren gemäß Anspruch 5, wobei der vorbestimmte Knoten eine schnurlose Basisstation ist.

8. Verfahren gemäß Anspruch 7, wobei der Schritt des Bestimmens, dass eine Übergabe gewünscht wird, das Identifizieren anhand vorbestimmter Zellenlageinformation, dass die Mobilfunk-Teilnehmereinheit und die schnurlose Basisstation in einem vorbestimmten Verhältnis stehen, umfasst.

## Revendications

1. Procédé de transfert de communications entre des réseaux, qui permet de transférer des communications d'un réseau de télécommunications initial (10) à un réseau de télécommunications destinataire (11), comprenant les opérations suivantes :
établir une communication entre une unité d'abonné mobile (12) et le réseau de télécommunications initial en utilisant un premier numéro d'identification (noté ID en 10) affecté à cette unité dans le réseau initial,
identifier le fait qu'un transfert au réseau destinataire est souhaité,
fournir au réseau initial un deuxième numéro d'identification (noté ID en 11) affecté à l'unité dans le réseau destinataire ;
lancer une demande de transfert de communication afin d'établir une communication avec l'unité dans le réseau destinataire en utilisant le deuxième numéro d'identification, et
établir une nouvelle liaison dans le réseau destinataire en utilisant le deuxième numéro d'identification.

2. Procédé selon la revendication 1, où le deuxième numéro d'identification affecté à l'unité dans le réseau destinataire est fourni préalablement à un noeud prédéterminé du réseau initial ; et
le procédé comporte l'opération consistant à fournir un signal, venant de l'unité d'abonné mobile, au noeud prédéterminé, demandant un transfert de l'unité d'abonné mobile identifiée par le deuxième numéro d'identification.

3. Procédé selon la revendication 2, comprenant l'opération initiale qui consiste à établir un trajet de transmission entre le noeud prédéterminé et un deuxième correspondant, où le noeud prédéterminé établit un trajet de transmission allant à l'unité d'abonné mobile via le réseau destinataire, maintient le trajet de communications avec le deuxième correspondant et réalise une liaison entre les deux trajets de transmission.

4. Procédé selon la revendication 2 ou 3, où le noeud prédéterminé est une station de base sans cordon (de 11).

5. Procédé selon l'une quelconque des revendications précédentes, qui a pour fonction de transférer une communication entre une unité d'abonné mobile et un deuxième correspondant, partant du réseau de télécommunications initial pour aller au réseau de télécommunications destinataire, le procédé comportant les opérations suivantes :
établir un trajet de transmission entre l'unité d'abonné mobile et un noeud prédéterminé du réseau destinataire via le réseau initial ;
établir un trajet de transmission entre le noeud prédéterminé se trouvant dans le réseau destinataire et le noeud correspondant ;
établir la liaison, au niveau du noeud prédéterminé se trouvant dans le réseau destinataire, entre les deux trajets de transmission ; et
connecter, au niveau du noeud prédéterminé se trouvant dans le réseau destinataire, l'unité d'abonné mobile et le deuxième correspondant.

6. Procédé selon la revendication 5, comprenant l'opération supplémentaire qui consiste à déconnecter la communication entre l'unité d'abonné mobile et le réseau de télécommunications initial.

7. Procédé selon la revendication 5, où le noeud prédéterminé est une station de base sans cordon.

8. Procédé selon la revendication 7, où l'opération consistant à déterminer le fait qu'un transfert est souhaité comprend l'opération consistant à identifier, à partir d'informations de sites cellulaires prédéterminées, le fait que l'unité d'abonné mobile et la tension de base sans cordon se trouvent dans une relation prédéterminée.
